# EUROPEAN PATENT APPLICATION

(11) **EP 3 712 828 A1**
(43) Date of publication of application: **23.09.2020**
(21) Application number: 19163910.3
(22) Date of filing: 19.03.2019
(51) Int. Cl.: G06Q 20/32, G06Q 20/38, G06Q 20/40, G06Q 20/12

(54) **PAYMENT TOKEN MECHANISM**

(71) Applicant: Mastercard International Incorporated, Purchase NY 10577 (US)
(72) Inventor: DUFFY, Colum, Richmond, TW9 2JE (GB); TIERNEY, John, Merseyside, Cheshire CH60 7TF (GB); HAMDAN, Husham, Croydon, Surrey CR0 5BP (GB)
(74) Representative: Richardson, Mark Jonathan

(57) **Abstract**

A method of obtaining tokenised payment card data at a computing device for use in a transaction, the computing device comprising a digital wallet containing a preregistered payment card, the method comprising: receiving, at the computing device, a request for tokenised payment card data corresponding to the preregistered payment card; sending, from the computing device to a token service provider, the request for tokenised payment card data; receiving, from the token service provider, tokenised payment data corresponding to the preregistered payment card, the tokenised payment card data being suitable for use in the transaction; using the received tokenised payment card data to complete the transaction

## Description

### TECHNICAL FIELD

The present disclosure relates to a payment token mechanism. In particular, the disclosure relates to a payment mechanism which provides ease of use for consumers and security for all parties involved in a transaction.

### BACKGROUND

Payment cards such as credit cards and debit cards are very widely used for all forms of financial transaction. A typical payment card now contains an integrated circuit (making it a "chip card" or "smart card") which can be read by a smart card reader in a merchant POS (point of sale) terminal. Using this approach, a transaction is typically confirmed by a personal identification number (PIN) entered by the card user. Cards of this type typically operate under the EMV standard for interoperation of chip cards and associated apparatus (such as POS terminals and ATMs). ISO/IEC 7816 provides a standard for operation of cards of this type. Contactless payments are now possible between suitably enabled payment cards and merchant terminals by short range wireless technology using NFC protocols - under EMV, these are covered under the ISO/IEC 14443 standard. Payment cards and devices are provided under a transaction scheme (such as Mastercard, American Express or Visa) and the transaction mechanism is mediated by the transaction scheme infrastructure. EMV specifications relate to contact and contactless payment protocols and are publicly available at the EMVCo website (EMVCo is the industry body tasked with maintaining these specifications with the support of major transaction scheme providers) - https://www.emvco.com/document-search/ - and would readily be consulted by the person skilled in the art. Terminology relating to EMV technology not expressly defined in this document is referenced and defined in EMV specifications, as will be appreciated by the person skilled in the art.

Increasingly, transactions are made in a digital domain ("ecommerce" transactions). Contactless payments may for example be performed by a mobile phone running a mobile payment application and communicating with a POS terminal using the same protocols as a contactless card. It is therefore now appropriate to refer to a "payment device" rather than a "payment card" (when one term is used below, it should be understood to extend to the other - "payment card" will generally be used for convenience). It is increasingly common, however, to transact with payment cards online, for example at a merchant website. Transactions will then be fed into the transaction scheme by a payment service provider providing an internet gateway to the merchant.

Online transactions have generally been treated as "Cardholder Not Present" (CNP) transactions (other examples would be credit card payments made by telephone), which create security issues as a full EMV protocol contact or contactless interaction may not be available and there is no proximity between payment card and POS terminal to provide an additional measure of security. A normal approach to providing additional customer verification is to provide a card verification code printed on the card. Additional technologies have also been developed to improve security and efficiency of transactions carried out in the digital domain - particularly relevant are tokenisation via a Merchant App and mobile wallet and the use of stored card details.

Taking the various ecommerce options in turn:
- Many ecommerce transactions will use a "Guest checkout" arrangement in which payment card details can be entered into a web browser or a merchant application on a mobile telecommunications device. Although the market availability of such a transaction option is high such an arrangement is potentially open to the possibility of card data being stolen via the use of scripts or malicious software. A recent example of such a security risk is the British Airways data breach which compromised the payment details of around 380,000 customers;
- Some merchants may, in addition to the Guest checkout arrangement, offer the ability for consumers to use stored payment card details to complete a transaction. In such a "card-on-file" arrangement a consumer will have been offered the opportunity to store their payment card details on the merchant's system (e.g. as part of a registration process or during a previous transaction). However, it is noted that card-on-file availability is applicable to a relatively small number of merchants. Additionally, card-on-file arrangements still can potentially pose a high security risk if the card-on-file permanent account numbers (PANs) are not tokenised and if the merchant account does not require additional cardholder authentication;
- An ecommerce arrangement that provides a relatively low security risk is the use of a merchant application (i.e. a merchant "app" on a mobile telecommunications device) which has been linked to a mobile payment application (e.g. a mobile wallet) on the mobile telecommunications device. In such an arrangement, tokenised card data that is available from the installed mobile payment application may be used in transactions with the merchant app. Although the security risk with such an arrangement is low (since the arrangement uses tokenised data) the market adoption and availability of such an arrangement is also low and is only supported by a limited number of merchants. A barrier to more widespread adoption of such an arrangement is the need for the merchant to support an additional payment interface via their mobile app. Tokenisation may be carried out by the transaction scheme or an appropriate service provider with the permission of the payment card issuer (the issuing bank with which the cardholder has an account). Tokenised transactions are routed in the transaction scheme so that the PAN (primary account number) associated with the tokenised card can be recovered from a digital vault allowing normal processing of the transaction. Tokenisation is typically used for mobile payment applications, but is often not used in online transactions between a cardholder using their own personal computer and a merchant website.

A further ecommerce security arrangement is the "3-D Secure" system which is a technology developed to provide an additional security layer for online transactions. The 3-D secure system may be incorporated into both the Guest Checkout and Card-on-File arrangements discussed above. It is based on a three domain model (issuer domain, acquirer domain and interoperability domain), the domains representing the issuer bank associated with the cardholder, the acquirer bank associated with the merchant, and the interoperability domain. Existing versions of the 3-D Secure protocols typically involve creation of an in-line window to the issuer domain enabling the cardholder to authenticate himself or herself to the issuer (if necessary) using elements of a password. This protocol is under active development to provide more effective authentication options and additional benefits to the participating parties, but at present can be inconvenient to users, particularly at the initial registration stage.

It is desirable to further develop existing protocols for online transaction to provide greater security and effectiveness without compromising ease of use for the user. This is challenging, as in order to provide more effective security measures, additional steps may be necessary which affect the user experience. This may be a disincentive to the user to register for and participate in more secure online protocols. The present disclosure has been devised to mitigate or overcome at least some of the above-mentioned problems.

### SUMMARY OF THE DISCLOSURE

According to a first aspect of the present disclosure there is provided a method of obtaining tokenised payment card data at a computing device for use in a transaction, the computing device comprising a digital wallet containing a preregistered payment card, the method comprising: receiving, at the computing device, a request for tokenised payment card data corresponding to the preregistered payment card, the tokenised payment card data being suitable for use in the transaction; sending, from the computing device to a token service provider, the request for tokenised payment card data; receiving, from the token service provider, tokenised payment data corresponding to the preregistered payment card, the tokenised payment card data being suitable for use in the transaction; using the received tokenised payment card data to complete the transaction.

The present disclosure provides a method of obtaining tokenised payment card data that can be used in a transaction. A computing device comprises a digital wallet containing at least one payment card that has been preregistered with the wallet.

Such preregistered payment cards may be used in transaction environments where the transaction infrastructure supports the operation of a digital wallet (e.g. an Apple® Pay transaction requires a card reader that supports contactless payments) but may not be suitable for use in other transaction environments, e.g. if a merchant has not configured their website or app for use with a user's digital wallet provider.

In the present disclosure however the computing device receives a request for tokenised payment card data corresponding to the preregistered payment card. This request may be initiated by a user of the computing device, e.g. by selecting a menu option within the digital wallet, or it may be generated automatically by the action of opening the digital wallet and, in the event of multiple cards being present within the wallet, selecting a card.

The computing device (via the digital wallet) then sends the request for tokenised payment card data corresponding to the preregistered payment card to a token service provider. It is noted that the request for tokenised payment card data may be a request for a token PAN that can be used in the transaction and/or a token expiry date that can be used in the transaction and/or a token CVC value that can be used in the transaction. The tokenised payment card data may be time limited (e.g. must be used within a certain period of time from the request) or use limited (e.g. it can only be used once or a limited number of times). It is further noted that the token service provider is an entity that stores the payment card details of the preregistered payment card and that furthermore the token service provider is able to retrieve those details on the basis of the received request from the digital wallet and then to generate tokenised payment card data relating to that payment card.

The tokenised payment card data is then received at the digital wallet from the token service provider and is used in the transaction.

The method according to the present disclosure has a number of advantages over existing methods, in particular because the provision of tokenised payment card data (e.g. a token PAN) provides a more secure method of payment than entering the actual payment card details as part of a transaction (either in-store at a merchant or via a web browser of merchant smart device app).

Additionally the provision of tokenised payment card data that can be used in a transaction means that merchants do not need to provide any additional hardware/software over and above the current point of sale terminals and existing online checkout arrangements.

The tokenized payment card data that is received at the digital wallet may either be used by the cardholder entering the tokenized data into a website checkout or via the digital wallet itself (e.g. Apple Pay, Samsung Pay, Google Pay and Issuer wallets).

Conveniently, the preregistered payment card may be a tokenised payment card, tokenisation of the card having taken place in registration of the payment card with the digital wallet. Where the preregistered payment card is a tokenised payment card then the sending step may comprise a token related to the preregistered payment card to the token service provider. Where the token service provider was responsible for tokenising the payment card then the sending of the token by the digital wallet allows the token service provider to identify the permanent account number (PAN) associated with the payment card.

It is noted that where a payment card has been preregistered with a digital wallet, the token with which it is associated will not generally be visible to the cardholder. Additionally, although such tokens may enable transactions within the context of a digital wallet *and* a merchant that supports that particular digital wallet, such a token will not be generally usable by the cardholder in a transaction even if it was visible. For example, it would not be possible to use such a token by entering the token into a "card number field" of an online checkout process.

The method according to the present disclosure enables the cardholder to request the generation of tokenised payment card data that is suitable for the transaction in hand. The tokenised payment card data is regarded as additional or further tokenised data, over and above the existing digital wallet token associated with the payment card in the digital wallet. The tokenised payment card data may be provided in a standard payment card number format such that the cardholder can then use that tokenised payment card data as a temporary replacement for the actual payment card details.

For example, the tokenised payment card data received from the token service provider may conveniently comprise a token PAN. The token PAN may be issued in the same format as the actual PAN of the payment card in order to enable the cardholder/digital wallet to use the token PAN in a transaction. The tokenised payment card data may additionally comprise a token expiry date and/or a token CVC value. It is noted that the request sent from the digital wallet to the token service provider may include a request for the issue of a token PAN and/or token expiry date and/or token CVC value.

The tokenised payment card data may be restricted in its usage conditions. By incorporating usage conditions into the tokenised payment card data the security of transactions using the cardholder's payment card may be increased since the tokenised payment card data will only be able to be used under certain circumstances. For example, the tokenised payment card data may be for "one time" use only.

Conveniently, the restricted usage conditions may comprise one or more of: time limited tokenised payment card data (e.g. the tokenised payment card data needs to be used within a predetermined time window before it expires); tokenised payment card data that is linked to a specific merchant; tokenised payment card data that is linked to a specific domain; tokenised payment card data that is linked to a single cardholder initiated transaction (e.g. the tokenised payment card data may be only be used once); tokenised payment card data that is linked to a single cardholder initiated transaction and subsequent merchant initiated transaction (e.g. a cardholder might use the tokenised payment card data to sign up to a subscription service and the merchant may subsequently be able to process the tokenised payment card data according to a subscription schedule).

According to a further aspect of the present disclosure there is provided a computing device for obtaining tokenised payment card data for use in a transaction, the computing device comprising: a digital wallet containing a preregistered payment card; a communications interface arranged to receive a request for tokenised payment card data for the preregistered payment card, the tokenised payment card data being suitable for use in the transaction, and arranged to send the request for tokenised payment card data to a token service provider wherein the communications interface is arranged to receive from the token service provider tokenised payment card data corresponding the preregistered payment card, the tokenised payment card data being suitable for use in the transaction, and the digital wallet is arranged to use the received tokenised payment card data to complete the transaction.

According to a further aspect of the present disclosure there is provided a method of performing a transaction using tokenised payment card data, the method comprising: receiving, at a token service provider server, a request from a computing device for tokenised payment card data suitable for use in the transaction and corresponding to a preregistered payment card stored in a digital wallet on the computing device; retrieving, in dependence on the request, payment card data relating to the preregistered payment card; generating tokenised payment card data for the retrieved payment card data, the tokenised payment card data being suitable for use in the transaction; sending the tokenised payment card data to the computing device for use in the transaction.

As noted above, the preregistered payment card may conveniently be a tokenised payment card, tokenisation of the card having taken place during registration of the payment card with the digital wallet and the receiving step may comprise receiving a token related to the preregistered payment card. Where the preregistered payment card is a tokenised payment card then retrieving the payment card data relating to the preregistered payment card may comprise detokenizing the received token using a digital vault, the vault containing details of the token and the associated payment card data.

Generation of the tokenised payment card data by the token service provider server may comprise requesting the digital vault to generate tokenised payment card data relating to the retrieved payment card data. Conveniently, the generated tokenised payment card data may comprise a token PAN. The generated tokenised payment card data may also comprise a token expiry date and/or a token CVC value.

The tokenised payment card data generated either by the token service provider server or the digital vault within the server may be restricted in its usage conditions.

The method of performing a transaction may further comprise: receiving from an acquirer entity, as part of the transaction, the tokenised payment card data that was sent to the computing device. The received tokenised payment card data may then be detokenized at the token service provider server to retrieve payment card data. The token service provider server may further validate received tokenised payment card data and confirm that any associated usage conditions are satisfied (e.g. the token PAN and, if present, token expiry and/or CVC value may be checked against usage restrictions that were placed on them during the earlier generation step).

Retrieved payment card data may then be forwarded to an issuer entity.

According to a further aspect of the present disclosure there is provided a token service provider server method for providing tokenised payment card data comprising: a server communications interface arranged to receive a request from a computing device for tokenised payment card data suitable for use in the transaction and corresponding to a preregistered payment card stored in a digital wallet on the computing device; a processor arranged to retrieve, in dependence on the request, payment card data relating to the preregistered payment card and arranged to generate tokenised payment card data for the retrieved payment card data, the tokenised payment card data being suitable for use in the transaction; wherein the server communications interface is arranged to send the tokenised payment card data to the computing device for use in the transaction. The processor may comprise a token service provider in communication with a digital vault.

The transaction may conveniently be an ecommerce transaction.

The present disclosure extends to a computer program comprising instructions which, when the program is executed by a computing device, cause the computing device to carry out a method of obtaining tokenised payment card data at a computing device for use in a transaction.

The present disclosure extends to a computer program comprising instructions which, when the program is executed by a server, cause the server to carry out a method of performing a transaction using tokenised payment card data.

A computer-readable storage medium comprising instructions which, when executed by a server, cause the server to carry out the method of performing a transaction using tokenised payment card data.

A computer-readable storage medium comprising instructions which, when executed by a computing device, cause the computing device to carry out the method of obtaining tokenised payment card data at a computing device for use in a transaction.

### BRIEF DESCRIPTION OF THE DRAWINGS

One or more embodiments of the disclosure will now be described, by way of example only, with reference to the accompanying drawings, in which:
Figure 1 shows schematically a transaction system using the four-party model;
Figure 2 shows an implementation of the transaction system of Figure 1 adapted for performing embodiments of the disclosure;
Figure 3 illustrates schematically elements of a transaction system in accordance with an embodiment of the disclosure;
Figure 4 shows a method of use according to an embodiment of the disclosure.

### DETAILED DESCRIPTION

General and specific embodiments of the disclosure will be described below with reference to the Figures. It is noted that the embodiments described below are presented in the context of an e-commerce transaction. However, it is noted that the methods and systems described below can also be used in a traditional transaction (e.g. where the cardholder is present in a merchant's shop).

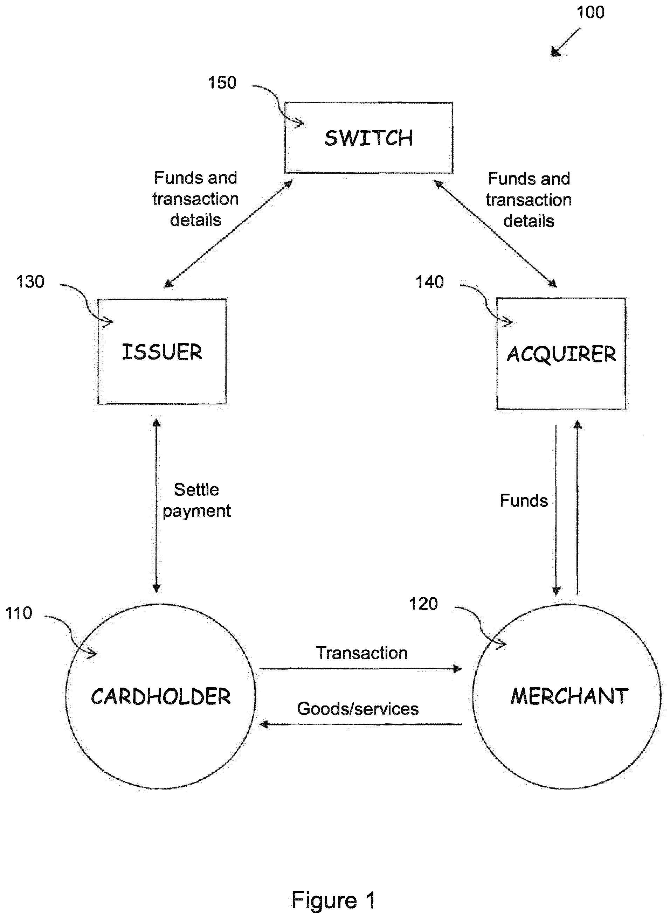

Figure 1 is a block diagram of a typical four-party model or four-party payment transaction scheme. The diagram illustrates the entities present in the model and the interactions occurring between entities operating in a card scheme.

Normally, card schemes - payment networks linked to payment cards - are based on one of two models: a three-party model or a four-party model (adopted by the present applicant). For the purposes of this document, the four-party model is described in further detail below.

The four-party model may be used as a basis for the transaction network. For each transaction, the model comprises four entity types: cardholder 110, merchant 120, issuer 130 and acquirer 140. In this model, the cardholder 110 purchases goods or services from the merchant 120. The issuer 130 is the bank or any other financial institution that issued the card to the cardholder 110. The acquirer 140 provides services for card processing to the merchant 120.

The model also comprises a central switch 150 - interactions between the issuer 130 and the acquirer 140 are routed via the switch 150. The switch 150 enables a merchant 120 associated with one particular bank acquirer 140 to accept payment transactions from a cardholder 110 associated with a different bank issuer 130.

A typical transaction between the entities in the four-party model can be divided into two main stages: authorisation and settlement. The cardholder 110 initiates a purchase of a good or service from the merchant 120 using their card. Details of the card and the transaction are sent to the issuer 130 via the acquirer 140 and the switch 150 to authorise the transaction. Should the transaction be considered abnormal by the issuer 130, the cardholder 110 may be required to undergo an additional verification process to verify their identity and the details of the transaction. Once the additional verification process is complete the transaction is authorised.

On completion of the transaction between the cardholder 110 and the merchant 120, the transaction details are submitted by the merchant 120 to the acquirer 140 for settlement.

The transaction details are then routed to the relevant issuer 130 by the acquirer 140 via the switch 150. Upon receipt of these transaction details, the issuer 130 provides the settlement funds to the switch 150, which in turn forwards these funds to the merchant 120 via the acquirer 140.

Separately, the issuer 130 and the cardholder 110 settle the payment amount between them. In return, a service fee is paid to the acquirer 140 by the merchant 120 for each transaction, and an interchange fee is paid to the issuer 130 by the acquirer 140 in return for the settlement of funds.

In practical implementations of a four-party system model, the roles of a specific party may involve multiple elements acting together. This is typically the case in implementations that have developed beyond a contact-based interaction between a customer card and a merchant terminal to digital implementations using proxy or virtual cards on user computing devices such as a smart phone.

It is noted that although Figure 1 is presented and described in relation to a four party model in which a switch 150 is used to forward funds between the issuer and acquirer, it is noted that in some situations the issuer and acquirer may be the same entity in which case the switch 150 is not required.

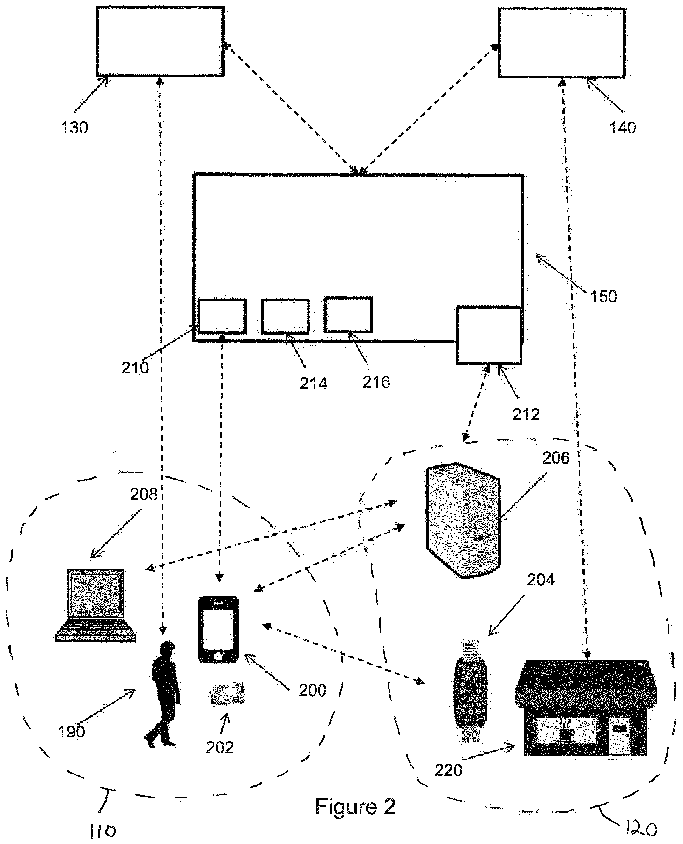

Figure 2 shows an architecture according to an embodiment of the disclosure appropriate for interaction between a cardholder 110 and a merchant 120.

In general the consumer 190 uses their computing device - which may be any or all of a cellular telephone handset, a tablet, a laptop, a static personal computer, smart wearable device (such as a smartwatch) or any other suitable computing device (here a cellular telephone handset or smartphone 200 is shown) - to act either as a proxy for a physical payment card 202 or as a virtual payment card operating only in a digital domain. The smartphone 200 achieves this with a mobile payment application and a digital wallet, as described below. The smart phone 200 is thus able to transact with a merchant POS terminal 204 using NFC or another contactless technology. However, online transactions are of particular interest in connection with embodiments of the disclosure, rather than contact or contactless transactions with a merchant POS terminal 204. To make an online transaction, the smartphone 200 may also be able to interact with a merchant server 206 representing the merchant 220 over any appropriate network connection, such as the public internet. An alternative computing device - laptop computer 208 - is also shown, interacting with the merchant server 206 over the public internet. Any other suitable computing device (such as a personal computer) may be used by the consumer 190 to carry out an online transaction in this way.

It is noted that the cardholder 110 shown in Figure 1 encompasses the consumer 190 and their associated devices (smartphone 200, card 202, laptop/PC 208) of Figure 2. It is also noted that the merchant 120 shown in Figure 1 encompasses the merchant store 220, POS terminal 204 or server 206 of Figure 2.

The transaction scheme infrastructure (transaction infrastructure) 150 here provides not only the computing infrastructure necessary to operate the card scheme and provide routing of transactions and other messaging to parties such as the acquirer 140 and the issuer 130, but also a wallet service 210 to support a digital wallet on the cardholder computing device, and an internet gateway 212 to accept internet based transactions for processing by the transaction infrastructure. In other embodiments, the wallet service 210 may be provided similarly by a third party with an appropriate trust relationship with the transaction scheme provider. To support tokenisation, a token service provider 214 is present (again, this is shown as part of transaction infrastructure 150 but may be provided by a third party with appropriate trust relationships, e.g. by the issuer 130), and the transaction scheme infrastructure provides a digital enablement service 216 to support the performance of tokenised digital transactions, and to interact with other elements of the system to allow transactions to be performed correctly.

For a tokenised transaction, the transaction is validated in the transaction scheme by mapping the cardholder token to their card PAN, checking the status of the token (to ensure that it is in date and otherwise valid), validating any cryptogram received from the computing device and any customer verification approach used. This allows the issuer to authorise the transaction in the normal manner.

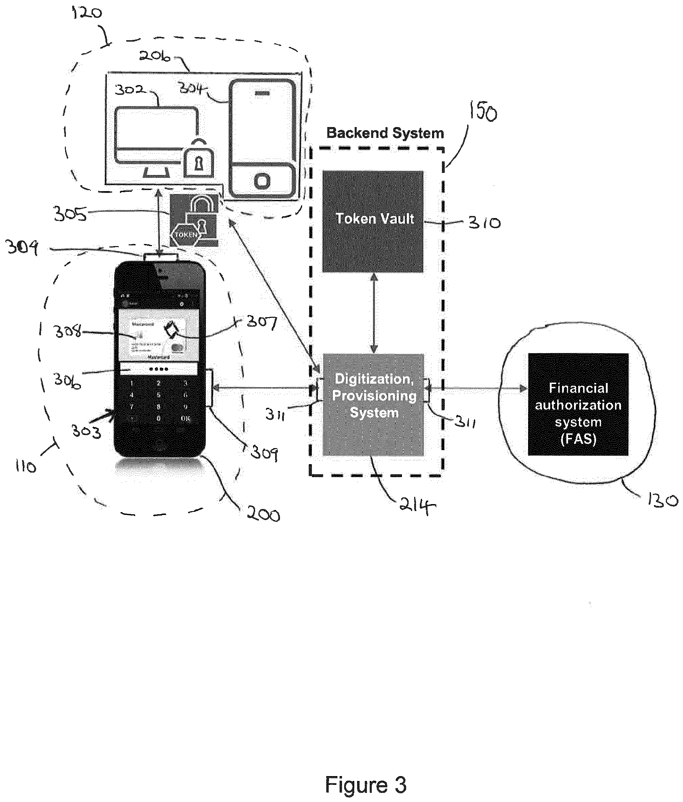

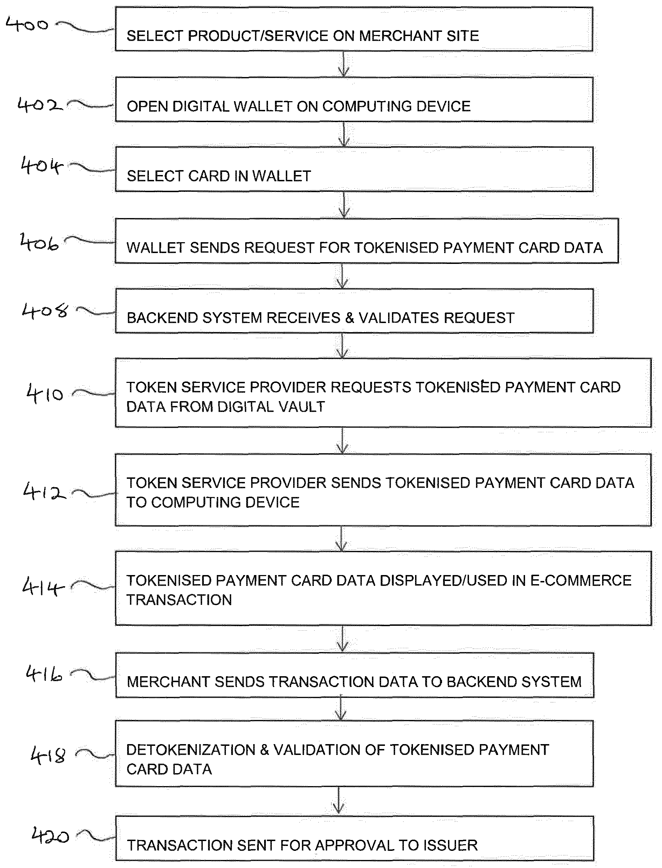

Figures 3 and 4 respectively show an architecture and method of use according to an embodiment of the disclosure.

As shown in Figure 3 the merchant server 206 supports a transaction interface in the form of a web browser interface 302 and a mobile computing device interface 304 to allow a cardholder to carry out online transactions with the merchant 120.

In step 400 (shown in Figure 4) the consumer 190 uses their computing device 200, 208 to select a product or service from the merchant 120 via the transaction interface provided by the server 206.

It is noted that the consumer may use the web interface 302 (via a laptop 208 or other computing device) to select the items or services for the transaction and then obtain tokenised payment card data via a separate device (e.g. the mobile 200). However, for the remainder of the description in relation to Figures 3 and 4 it is assumed that the transaction and the provision of tokenised payment card data 305 is all being provided by the mobile device 200.

In step 402 the consumer 190 opens the digital wallet 306 on their computing device 200. As part of accessing the wallet the consumer 190 may authenticate themselves on the computing device 200. This authentication may be via a device unlock action (e.g. entering a passcode or a biometric check such as fingerprint analysis or facial analysis) and/or via a dedicated authentication step requested by the wallet 306.

In step 404 the consumer 190 selects (using a user input 303 on the computing device 200 such as a keypad, touchscreen or voice based input) a preregistered payment card 308 from within the digital wallet 306 on the computing device 200 and requests tokenised payment card data 305 is provided in order to complete the ecommerce transaction on the merchant server 206. [It is noted that in an alternative arrangement, step 404 may comprise the consumer 190 using a default payment card 308 within the digital wallet 306 on the computing device and requesting tokenised payment card data 305 in order to complete the ecommerce transaction on the merchant server 206.]

It is noted that the request for tokenised payment card data may additionally allow the consumer 190 to specify restrictions for the tokenised payment card data, e.g. the consumer may specify a duration that the tokenised payment card data is valid for, the consumer may specify that the tokenised payment card data is for a single use only or is for use until further notice. The consumer may also specify the merchant 120 where the tokenised data may be used. Additionally, the consumer may specify a maximum transaction amount that the tokenised payment card data may be used for. It is also noted that the issuer entity 130 may also specify these restrictions.

In step 406 the wallet sends, via a device communications interface 309, an authorisation request for tokenised payment card data 305 using the selected preregistered payment card on the device 200 to the backend system 150. The request comprises the token 307 corresponding to the preregistered card and confirmation that the consumer 190 has been authorised on the device 200. The authorisation request is received by the wallet service 210 in the backend system 150 and routed to the token service provider 214. The tokenised payment card data 305 requested by the wallet 306 comprises a request for a token PAN, token expiry date and a token CVC value. In alternative arrangement, the tokenised payment card data may comprise a token PAN and one or both of the expiry date and CVC value may be the actual card expiry date or CVC value.

[It is noted in Figure 3 that the backend system 150 takes the form of a token service provider server which comprises a processor in the form of the token service provider 214.]

In step 408 the backend system 150 receives the request (via a server communications interface 311), including the preregistered card token, and the token service provider 214 performs detokenization of the received preregistered card token 307 using a token vault 310 in the backend system in order to receive the PAN corresponding to the preregistered payment card token.

It is noted that the token vault 310 is a secure centralized server where issued tokens, and the PANs they represent, are stored securely. Security is paramount as the token vault is the only area in which the token can be mapped back to the consumer's original card details.

In step 410 the token service provider 214 requests the token vault 310 to generate tokenised payment card data 305. Any usage restrictions applied by the consumer 190 or issuer 130 are included in the request. The token vault 310 may generate the CVC value according to a suitable algorithm. The expiry date may be generated to be different to the payment card expiry date and the expiry date of the token used to generate the request.

The token vault 310 provides the requested tokenised payment card data 305 to the token service provider 214 and in step 412 the token service provider 214 sends, via the server communications interface 311, the generated token PAN, token expiry date and token CVC value to the computing device 200 for use in the ecommerce transaction with the merchant 120 (it is noted that the generated token PAN, token expiry date and token CVC value are received at the computing device 200 via the device communications interface 309).

In step 414 the computing device may display the received tokenised payment card data for the consumer 190 to use to complete the ecommerce transaction with the merchant 120. It is noted that the consumer 190 may use the tokenised payment card data in a merchant app (if they are using the mobile interface 304) or may enter it into a payment field in a web browser (if they are conducting the ecommerce transaction via the web browser interface 302). The received tokenised payment card data may be prepopulated into a merchant app in the case that the consumer 190 is undertaking the ecommerce transaction on a single device. It is noted that the computing device and the merchant systems may interact via the device communications interface 309 and the server communications interface 311.

Once the consumer 190 has completed the transaction the merchant 120 sends (via the acquirer entity 140), in step 416, the transaction data generated during the ecommerce transaction (including the tokenised payment card data) to the backend system 150 (the transaction data being received at the backend system /server 150 via the server communications interface 311). The token service provider 214 then detokenizes, in step 418, the tokenised payment card data and validates the token PAN, expiry date and CVC value. Any usage restrictions (domain controls) are also validated in step 418.

In step 420 the backend system 150 then forwards, via the server communications interface 311, the transaction, including the consumer's actual PAN, to the issuer entity 130, for approval.

Many modifications may be made to the above examples without departing from the scope of the present disclosure as defined in the accompanying claims.

## Claims

1. A method of obtaining tokenised payment card data at a computing device for use in a transaction, the computing device comprising a digital wallet containing a preregistered payment card, the method comprising
receiving, at the computing device, a request for tokenised payment card data corresponding to the preregistered payment card, the tokenised payment card data being suitable for use in the transaction;
sending, from the computing device to a token service provider, the request for tokenised payment card data;
receiving, from the token service provider, tokenised payment data corresponding to the preregistered payment card, the tokenised payment card data being suitable for use in the transaction
using the received tokenised payment card data to complete the transaction.

2. A method as claimed in Claim 1, wherein the preregistered payment card is a tokenised payment card, tokenisation of the card having taken place in registration of the payment card with the digital wallet.

3. A method as claimed in Claim 2, where in the sending step comprises sending a token related to the preregistered payment card to the token service provider.

4. A method as claimed in any preceding claim, wherein the tokenised payment card data received from the token service provider comprises a token PAN.

5. A method as claimed in Claim 4, wherein the tokenised payment card data comprises a token expiry date and/or a token CVC value.

6. A method as claimed in any preceding claim, wherein the tokenised payment card data is restricted in its usage conditions.

7. A method as claimed in Claim 6, wherein the restricted usage conditions comprise one or more of: time limited tokenised payment card data; tokenised payment card data that is linked to a specific merchant; tokenised payment card data that is linked to a specific domain; tokenised payment card data that is linked to a single cardholder initiated transaction; tokenised payment card data that is linked to a single cardholder initiated transaction and subsequent merchant initiated transaction.

8. A computing device for obtaining tokenised payment card data for use in a transaction, the computing device comprising:
a digital wallet containing a preregistered payment card;
a device communications interface arranged to receive a request for tokenised payment card data for the preregistered payment card, the tokenised payment card data being suitable for use in the transaction, and arranged to send the request for tokenised payment card data to a token service provider
wherein the device communications interface is arranged to receive from the token service provider tokenised payment data corresponding the preregistered payment card, the tokenised payment card data being suitable for use in the transaction, and the digital wallet is arranged to use the received tokenised payment card data to complete the transaction.

9. A method of performing a transaction using tokenised payment card data, the method comprising:
receiving, at a token service provider server, a request from a computing device for tokenised payment card data suitable for use in the transaction and corresponding to a preregistered payment card stored in a digital wallet on the computing device;
retrieving, in dependence on the request, payment card data relating to the preregistered payment card;
generating tokenised payment card data for the retrieved payment card data, the tokenised payment card data being suitable for use in the transaction;
sending the tokenised payment card data to the computing device for use in the transaction.

10. A method as claimed in Claim 9, wherein the preregistered payment card is a tokenised payment card, tokenisation of the card having taken place during registration of the payment card with the digital wallet and the receiving step comprises receiving a token related to the preregistered payment card.

11. A method as claimed in Claim 10, wherein retrieving the payment card data relating to the preregistered payment card comprises detokenizing the received token using a digital vault, the vault containing details of the token and the associated payment card data.

12. A method as claimed in any of Claims 9 to 11, wherein generating the tokenised payment card data comprises requesting the digital vault to generate tokenised payment card data relating to the retrieved payment card data.

13. A token service provider server for providing tokenised payment card data comprising:
a server communications interface arranged to receive a request from a computing device for tokenised payment card data suitable for use in the transaction and corresponding to a preregistered payment card stored in a digital wallet on the computing device;
a processor arranged to retrieve, in dependence on the request, payment card data relating to the preregistered payment card and arranged to generate tokenised payment card data for the retrieved payment card data, the tokenised payment card data being suitable for use in the transaction;
wherein the server communications interface is arranged to send the tokenised payment card data to the computing device for use in the transaction.

14. A computer program comprising instructions which, when the program is executed by a computing device, cause the computing device to carry out the method of any of claims 1 to 7 or, when the program is executed by a server, cause the server to carry out the method of any of claims 9 to 12.

15. A computer-readable storage medium comprising instructions which, when executed by a computing device, cause the computing device to carry out the method of any of claims 1 to 7 or, when executed by the server, cause the server to carry out the method of any of claims 9 to 12.
